# DEMANDE DE BREVET EUROPEEN

(11) **EP 0 730 325 A1**
(43) Date de publication de la demande: **04.09.1996**
(21) Numéro de dépôt: 96400440.2
(22) Date de dépôt: 01.03.1996
(51) Int. Cl.: H01R 35/02, B60R 16/02

(54) **Contacteur éléctrique tournant perfectionné à bruit de fonctionnement réduit**

(30) Priorité: 03.03.1995 FR 9502492
(71) Demandeur: MAGNETI MARELLI FRANCE, F-92000 Nanterre (FR)
(72) Inventeur: Hallet, Michel, 14320 Clinchamps/Orne (FR); Heroult, Jean-Louis, 14790 Verson (FR)
(74) Mandataire: Texier, Christian

(57) **Abrégé**

La présente invention concerne un contacteur électrique tournant du type connu comprenant deux éléments de boîtier (100, 200) susceptibles de rotation relative, et un organe conducteur électrique souple (300) placé entre ces deux éléments (100, 200), caractérisé par le fait qu'il comprend un organe élastique (350) qui assure une sollicitation axiale mécanique sur l'organe conducteur électrique souple (400).

## Description

La présente invention concerne le domaine des contacteurs électriques tournants.

Plus précisément, la présente invention concerne les contacteurs du type comprenant:
- un premier élément de boîtier fixe,
- un second élément de boîtier mobile à rotation par rapport au premier élément de boîtier fixe, et
- un organe conducteur électrique souple placé entre l'élément fixe et l'élément mobile du boîtier et relié à ceux-ci.

La présente invention trouve notamment, mais non exclusivement, application à la transmission de signaux électriques entre des moyens liés au volant d'un véhicule automobile, par exemple un système de gonflage de sac de protection type airbag et des moyens de commande indépendants du volant liés à la colonne de direction.

De nombreux contacteurs électriques tournants du type rappelé ci-dessus ont déjà été proposés.

On peut trouver par exemple un descriptif général de ces contacteurs dans les documents GB-A-869275, GB-A-2216476, US-A-3525536, FR-A-2494922, FR-A-2667457, US-A-4789342, US-A-4540223, FR-A-2667458, FR-A-2667456, FR-A-2477789, DE-A-751684, FR-A-2249458, GB-A-2164506, CH-A-167629, US-A-4422699, US-A-4836795, DE-A-3041258, US-A-4451105, US-A-3525536, US-A-4722690, US-A-4875860.

Les contacteurs électriques tournants du type précité ont déjà rendu de grands services. Cependant, ils présentent l'inconvénient de présenter un bruit de fonctionnement notable. Ce bruit semble dû à plusieurs phénomènes.

En premier lieu, le bruit semble dû au frottement des pièces entre elles au cours du fonctionnement du contacteur, notamment au frottement mutuel des deux éléments de boîtier.

En second lieu, le bruit semble dû au jeu de l'organe conducteur électrique conduisant à un déplacement axial ou claquement de l'organe conducteur électrique dans le boîtier du contacteur.

En troisième lieu, le bruit semble dû en partie au glissement de l'organe conducteur électrique, par ses chants, sur les surfaces en regard des éléments de boîtier.

Enfin, en quatrième lieu, le bruit semble dû en partie au jeu des différentes pièces composant le contacteur.

Certains de ces défauts du contacteur peuvent être résolus en imposant des tolérances serrées sur les différentes pièces composant le contacteur. Cependant, cette conception ne permet pas totalement d'éliminer les bruits. En particulier, une étude attentive des contacteurs électriques tournants connus montre que certaines mesures permettant de limiter ou éliminer certains phénomènes générateurs de bruit sont au contraire néfastes à l'égard d'autres phénomènes. Par exemple, limiter les jeux de fonctionnement entre les diverses pièces du contacteur conduit généralement à des variations de couple sur l'appareil ou peut entraîner des coincements ou blocages voire usures.

Pour tenter de réduire les bruits, on a également proposé d'introduire des éléments de feutrine dans le contacteur. Toutefois, ces tentatives n'ont pas donné satisfaction pour l'instant. Il a également été parfois introduit des corps gras à l'intérieur des contacteurs tournants pour jouer sur le couple et le bruit.

Il a également été proposé dans les documents EP-A-243047 et FR-A-2709608, des éléments élastiques qui assurent une sollicitation axiale, voire radiale, de l'organe conducteur souple. Cependant, ces dispositions n'ont pas jusqu'ici donné satisfaction.

La présente invention a maintenant pour but de perfectionner les contacteurs électriques tournants connus, notamment pour réduire le bruit de fonctionnement de ceux-ci.

Ce but est atteint selon la présente invention, grâce à un contacteur électrique tournant du type connu comprenant deux éléments de boîtier susceptibles de rotation relative et un organe conducteur électrique souple placé entre ces deux éléments, caractérisé par le fait qu'il comprend un organe élastique qui assure une sollicitation axiale mécanique sur l'organe conducteur électrique souple, et une rondelle plane est intercalée entre l'organe élastique et l'organe conducteur électrique souple.

Selon une autre caractéristique avantageuse de la présente invention, l'organe élastique est formé d'une rondelle ressort par exemple clipsée.

D'autres caractéristiques, buts et avantages de la présente invention apparaîtront à la lecture de la description détaillée qui va suivre, et en regard des dessins annexés donnés à titre d'exemple non limitatif et sur lesquels :
- la figure 1 représente une première vue en perspective éclatée d'un contacteur électrique tournant conforme à la présente invention,

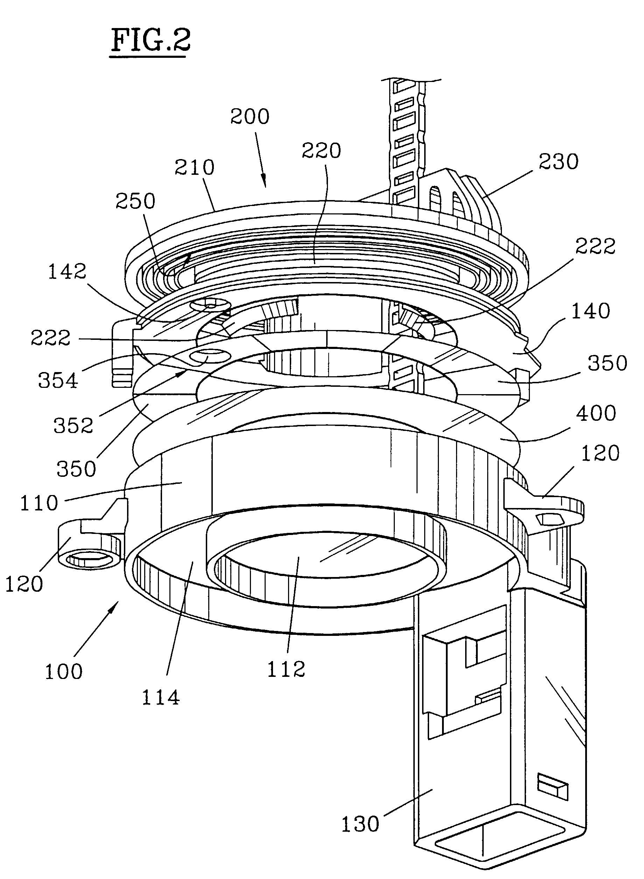

- la figure 2 représente une seconde vue en perspective éclatée du même contacteur,

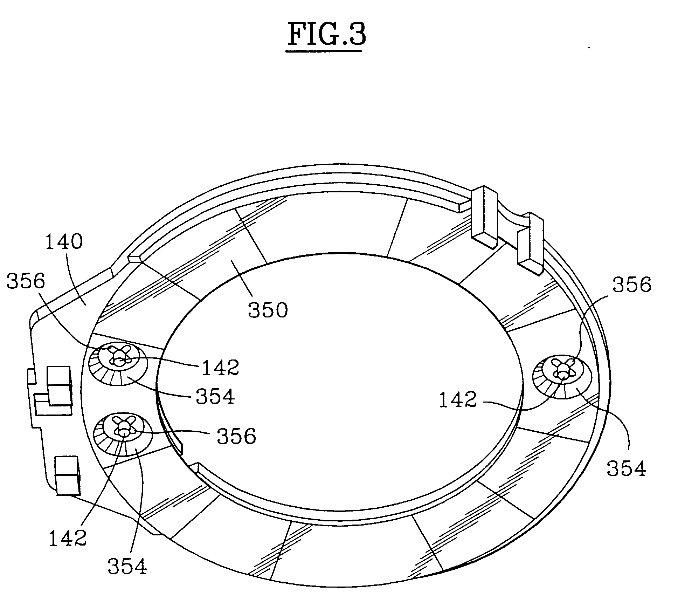

- la figure 3 représente une vue en perspective d'un organe élastique clipsé sur une entretoise de boîtier fixe conforme à la présente invention,
et
la figure 4 représente une vue partielle en coupe axiale d'un contacteur électrique tournant conforme à la présente invention.

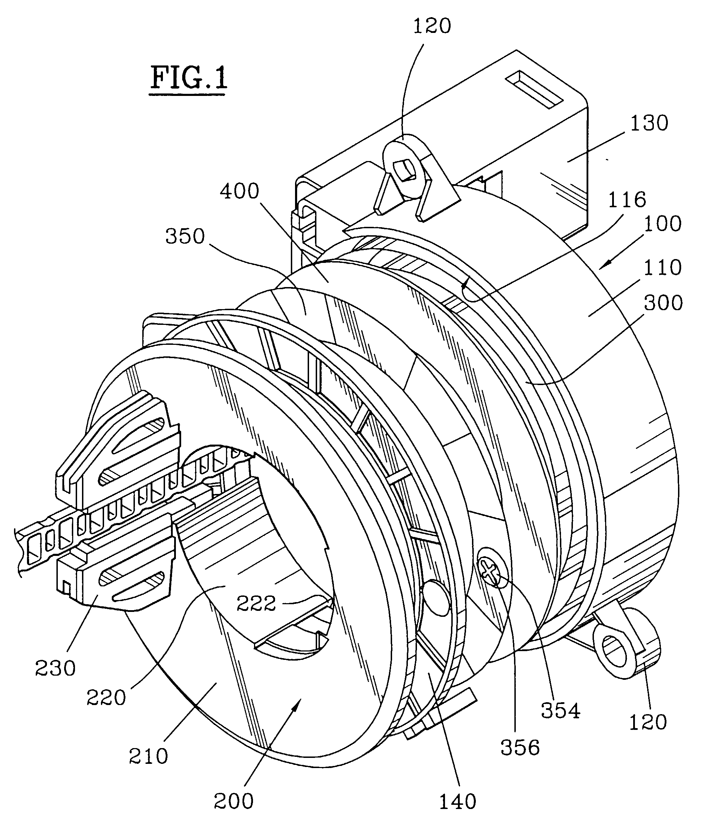

Le contacteur électrique tournant représenté sur les figures 1 et suivantes annexées comprend essentiellement un boîtier fixe 100, un couvercle rotatif 200, un conducteur souple 300, un organe élastique 350 et une rondelle 400.

Le boîtier fixe 100 peut faire l'objet de nombreux modes de réalisation.

Il est formé, de préférence, par moulage en matière plastique. Selon le mode de réalisation particulier et non limitatif représenté sur les figures annexées, le boîtier 100 comprend essentiellement deux parois circulaires concentriques 110, 112 reliées entre elles par une paroi de base 114 en forme de couronne. Les parois 110, 112 et 114 précitées, délimitent ainsi une chambre annulaire 116 apte à contenir le conducteur 300.

La paroi cylindrique externe 110 est pourvue de préférence de points de fixation 120 formés par exemple d'oeillets comme représenté sur les figures annexées.

En outre, la paroi cylindrique extérieure 110 est munie, de préférence sur sa périphérie extérieure, d'un corps de connecteur 130. Ce corps de connecteur 130 comprend des contacts électriques reliés respectivement à des pistes du conducteur souple 300 ou reçoit en traversée l'une des extrémités du conducteur 300. Le connecteur 130 s'étend avantageusement axialement, c'est-à-dire dans une direction générale parallèle à l'axe des parois 110, 112.

Selon le mode de réalisation préférentiel représenté sur les figures annexées, la cage cylindrique délimitée par les parois 110, 112 et 114 est complétée par une entretoise 140 en forme de couronne. Cette entretoise 140 est liée à rotation avec le boîtier 100. Elle obture partiellement le contour d'ouverture de la chambre annulaire 116 précitée.

L'entretoise 140 sert de plaque intermédiaire entre le boîtier formé par les parois 110, 112, 114 et le couvercle 200. Elle peut assurer par ailleurs diverses fonctions telles que support mécanique, support de contact électrique et/ou protection.

Le couvercle 200 comprend essentiellement une paroi 210 plane en forme de couronne, coaxiale au boîtier 100. La paroi 210 est munie sur sa périphérie interne d'un fût cylindrique 220, ou de différents segments cylindriques équi-répartis autour de son axe, comme représenté sur les figures annexées, engagé dans l'espace interne du boîtier 100. Ainsi le couvercle 210 est monté et guidé à rotation sur le boîtier 100.

Le couvercle 200 est retenu à translation sur le boîtier 100 par tout moyen approprié, par exemple à l'aide de dents 222 en saillie sur l'extrémité du fût 220 ou des segments composants ce fût 220, lesquelles dents 222 viennent en prise avec la paroi cylindrique 112.

De préférence, le couvercle 210 est muni également d'un corps de connecteur 230 au niveau de sa périphérie interne, sur sa face opposée au fût 220. Le corps de connecteur 230 s'étend dans une direction axiale, c'est-à-dire parallèlement à l'axe du couvercle 200 et du boîtier 100.

Le couvercle 200 est ainsi placé sur la face de l'entretoise 140 opposée à la chambre annulaire 116.

Sur sa face 212 adjacente à cette entretoise 140, le couvercle 210 est muni, selon la variante de réalisation préférentielle de l'invention, d'une rainure spiralée 250, c'est-à-dire une rainure en spirale centrée sur un axe coaxial à l'axe du boîtier 100 et du couvercle 200.

Cette rainure spiralée 250 est de préférence adaptée pour recevoir un index (non représenté sur les figures annexées pour simplifier l'illustration) engagé par ailleurs dans une rainure radiale ménagée dans l'entretoise 140. Ledit index est placé en regard d'une fenêtre optiquement transparente formée dans le couvercle 200.

Ainsi, l'index précité est, d'une part guidé à déplacement radial par rapport à l'axe de rotation du contacteur sur l'entretoise 140, d'autre part entraîné à déplacement radial par la rainure spiralée 250 lors du déplacement relatif à rotation du couvercle 200 par rapport au boîtier 100. Ainsi, l'index en coopération avec la fenêtre permet de définir la position relative entre les éléments 100 et 200.

Très préférentiellement, la fenêtre est limitée géométriquement à la position de l'index obtenue en point milieu de la course relative entre les éléments de boîtier 100 et 200.

Ainsi, la présence de l'index en regard de la fenêtre permet directement d'identifier la position point milieu du contacteur.

La rainure spiralée 250 comprend de préférence un nombre de tours égal au nombre de tours de rotation souhaité pour le volant du véhicule, c'est-à-dire le nombre de tours nécessaire entre le boîtier 100 et le couvercle 200.

Les extrémités respectives de la rainure spiralée 250 forment par ailleurs deux butées pour l'index.

Le couvercle 210 ainsi que l'entretoise 140 sont formés avantageusement par moulage en matière plastique, comme le boîtier 100.

Le conducteur souple peut faire l'objet de nombreux modes de réalisation. Il peut s'agir par exemple d'un faisceau de fils électriquement conducteurs isolés entre eux, ou encore de préférence d'un circuit imprimé ou un film de plastique souple pourvu de plusieurs pistes métallisés parallèles. Les extrémités du conducteur souple 300 sont reliées respectivement aux contacts électriques placés dans le corps de connecteur 130 et aux contacts électriques placés dans le corps de connecteur 230 ou traversent ces corps de connecteur 130, 230.

Selon le mode de réalisation préférentiel de l'invention représenté sur les figures annexées, la rondelle 400 est formée d'une rondelle annulaire plane placée dans le boîtier de contacteur et reposant contre le chant du ruban 300 adjacent à l'entretoise 140.

L'organe élastique ressort 350 est placé entre la rondelle 400 et l'entretoise 140. Ainsi, la combinaison du ressort 350 et de la rondelle 400 exerce un effort axial mécanique sur le ruban 300.

La rondelle 400 peut être réalisée en tout matériau approprié, avantageusement en polytétrafluoro-éthylène.

De préférence, la rondelle 400 est pourvue de moyens assurant une liaison à rotation avec le couvercle 200.

Ces moyens peuvent être formés par exemple de prolongements prévus sur le connecteur 230, ou encore par l'extrémité corespondante du ruban 300.

L'organe élastique 350 peut également faire l'objet de nombreux modes de réalisation. Il peut s'agir par exemple d'une rondelle souple.

L'organe élastique 350 est de préférence réalisé dans l'un des matériaux choisi dans le groupe comprenant l'acier, le bronze phosphore, des matériaux synthétiques, ou encore des matériaux silicones, tels que des silicones fluorés.

De préférence, l'organe élastique 350 est fixé sur l'entretoise 140, ou encore directement sur le couvercle 200 lorsque le contacteur ne comprend pas d'indexage réalisé sous forme de l'index déplacé dans la rainure spiralée 250.

Selon le mode de réalisation préférentiel, l'organe élastique 350 est formé d'une rondelle élastique emboutie pour présenter des ondulations périphériques, comme schématisé sur les figures annexées.

En outre, l'organe élastique 350 comprend de préférence des excroissances localisées 352 formées par emboutissage, réparties angulairement sur la périphérie de l'organe élastique 350. Ces excroissances 352 sont conçues pour assurer la fixation, par exemple par clipsage de l'organe élastique 350 sur l'entretoise 140.

A cette fin, le sommet 354 des excroissances est pourvu de préférence d'une découpe en étoile 356, par exemple à quatre branches, engagée sur un téton respectif ou équivalent 142 venu de moulage sur l'entretoise 140.

Selon le mode de réalisation préférentiel représenté sur les figures annexées, il est prévu ainsi trois excroissances 354 et trois tétons 142.

Deux excroissances 354 et les deux tétons 142 respectivement associés sont regroupés dans une zone diamétralement opposée à la troisième excroissance 354 et téton 142 associé. Ils sont placés respectivement de part et d'autre de l'index de visualisation du point milieu et de la fenêtre associée.

Bien entendu la présente invention n'est pas limitée au mode de réalisation particulier qui vient d'être décrit mais s'étend à toute variante conforme à son esprit.

L'homme de l'art comprendra aisément que l'utilisation d'un organe élastique conforme à la présente invention permet de limiter le bruit de fonctionnement du contacteur.

L'invention permet notamment de limiter les zones de frottement du contacteur, d'une part entre les dentures 222 et l'élément de boîtier 100 et, d'autre part entre le couvercle 200 et l'entretoise 140.

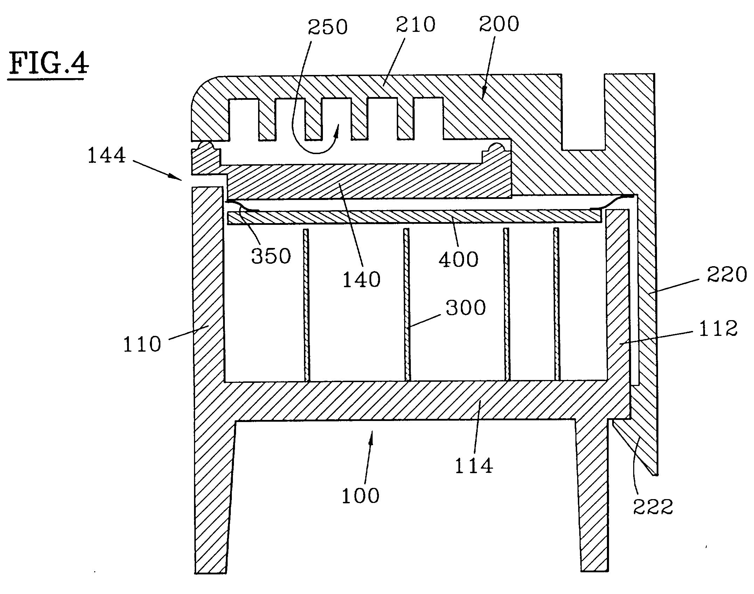

La présente invention permet également d'obtenir une zone élastique sans jeu référencée 144 sur la figure 4 entre l'entretoise 140 et l'élément de boîtier 100.

La présente invention permet de supprimer la zone de frottement entre l'entretoise 140 et l'élément de boîtier 100.

La zone élastique 144 précitée permet de rattraper les défauts de forme du couvercle 200 et de l'entretoise 140.

Enfin, l'utilisation d'un organe élastique 350 permet de supprimer le jeu entre les chants de l'organe conducteur 350, et d'une part la paroi de base de l'élément de boîtier 100, d'autre part la rondelle 400.

L'invention permet également d'éviter toute utilisation de corps gras à l'intérieur des contacteurs et d'obtenir un couple constant sur toute la plage de déplacement.

Il faut par ailleurs noter que l'organe élastique 350 permet de conserver tous les avantages ci-dessus quelle que soit l'amplitude du déplacement et pendant toute la durée de vie des contacteurs, grâce à son auto-adaptation permettant de récupérer les jeux et déformations des pièces des contacteurs, notamment sous l'effet du vieillissement et/ou de contraintes thermiques, et ce en particulier lorsque ces pièces sont réalisées en matière plastique.

## Revendications

1. Contacteur électrique tournant du type connu comprenant deux éléments de boîtier (100, 200) susceptibles de rotation relative, et un organe conducteur électrique souple (300) placé entre ces deux éléments (100, 200), caractérisé par le fait qu'il comprend un organe élastique (350) qui assure une sollicitation axiale mécanique sur l'organe conducteur électrique souple (400) et une rondelle plane (400) intercalée entre l'organe élastique (350) et l'organe conducteur électrique souple (300).

2. Contacteur selon la revendication 1, caractérisé par le fait que l'organe élastique (350) est formé d'une rondelle ressort de préférence clipsée sur un élément de boîtier (140).

3. Contacteur selon l'une des revendications 1 et 2, caractérisé par le fait que la rondelle plane (400) est liée à rotation avec l'élément de boîtier mobile (200).

4. Contacteur selon l'une des revendications 1 à 3, caractérisé par le fait que l'organe élastique (350) est fixé, de préférence, clipsé sur une entretoise (140) liée à l'élément fixe (100) du boîtier.

5. Contacteur selon l'une des revendications 1 à 3, caractérisé par le fait que l'organe élastique (350) est fixé sur l'élément mobile (200) du boîtier.

6. Contacteur selon l'une des revendications 1 à 5, caractérisé par le fait que l'organe élastique (350) est choisi dans le groupe de matériau comprenant l'acier, le bronze phosphore, les matériaux synthétiques ou des matériaux silicones, tels que silicone fluoré.

7. Contacteur selon l'une des revendications 1 à 6, caractérisé par le fait que l'organe élastique (350) présente des ondulations périphériques.

8. Contacteur selon l'une des revendications 1 à 7, caractérisé par le fait que l'organe élastique (350) comprend localement des excroissances embouties (354) adaptées pour être clipsées sur des tétons (142) venus de moulage sur l'un des éléments du boîtier (140).

9. Contacteur selon la revendication 8, caractérisé par le fait que la paroi de base des excroissances embouties (354) présente une découpe (356) conçue pour un clipsage.
